# EUROPÄISCHE PATENTSCHRIFT

(11) **EP 2 929 615 B1**
(45) Veröffentlichungstag und Bekanntmachung des Hinweises auf die Patenterteilung: **16.09.2020**
(21) Anmeldenummer: 13824092.4
(22) Anmeldetag: 02.12.2013
(51) Int. Cl.: H02J 7/02, H04B 10/80, H02J 50/30

(54) **DRAHTLOSE FERNENERGIEVERSORGUNG FÜR UNBEMANNTE FLUGGERÄTE**
WIRELESS REMOTE ENERGY SUPPLY FOR UNMANNED AERIAL VEHICLES
TÉLÉALIMENTATION SANS FIL EN ÉNERGIE POUR DES ENGINS VOLANTS SANS PILOTE

(30) Priorität: 05.12.2012 DE 102012023719
(43) Veröffentlichungstag der Anmeldung: 14.10.2015
(73) Patentinhaber: Airbus Defence and Space GmbH, 85521 Ottobrunn (DE)
(72) Erfinder: HIEBL, Manfred, 86633 Neuburg a. d. Donau (DE); PONGRATZ, Hans, Wolfgang, 82024 Taufkirchen (DE)
(74) Vertreter: LKGLOBAL Lorenz & Kopf PartG mbB Patentanwälte
(86) Internationale Anmeldenummer: PCT/DE2013/000713
(87) Internationale Veröffentlichungsnummer: WO 2014/086330

(56) Entgegenhaltungen:
- EP-A1- 1 566 902
- EP-A2- 1 469 617
- WO-A1-2008/097669
- WO-A2-2009/083990
- DE-A1-102004 055 498
- US-A- 5 260 639
- US-A1- 2003 206 350
- US-B1- 6 364 253
- US-B1- 6 407 535
- ROBERT A. HARDIN ET AL: "Active beam position stabilization of pulsed lasers for long-distance ion profile diagnostics at the Spallation Neutron Source (SNS)", OPTICS EXPRESS, vol. 19, no. 4, 14 February 2011 (2011-02-14), page 2874, XP055528096, US ISSN: 2161-2072, DOI: 10.1364/OE.19.002874

## Beschreibung

### Gebiet der Erfindung

Die Erfindung betrifft eine Vorrichtung zur drahtlosen elektrischen Fernenergieversorgung von unbemannten Kleinfluggeräten, insbesondere auf Entfernungen bis zu etwa 10 km, ausgehend von einer stationären oder mobilen Bodenstation oder von einer fliegenden Station aus unter Benutzung von Hochleistungslasern. Insbesondere betrifft die Erfindung eine Sendeeinheit zum leitungslosen Übertragen von Energie mittels eines gebündelten Laserstrahls sowie ein Fluggerät mit einer Empfangseinheit zum Empfangen des von der Sendeeinheit ausgesandten gebündelten Laserstrahls.

### Technischer Hintergrund der Erfindung

Unbemannte elektrisch angetriebene Kleinflugzeuge mit typischen Gewichten von ca. 10 kg bzw. darunter werden im unteren Höhenbereich von ungefähr 5 km bis 10 km Flughöhe zur Überwachung und Aufklärung eingesetzt. Beim Einsatz solcher Kleinflugzeuge kann beispielsweise angestrebt werden, die Einsatzzeit bzw. Flugzeit zu maximieren und den Fluggeräten eine Geschwindigkeit und Stabilität zu verleihen, die es erlaubt gegen vorherrschende Winde und Turbulenzen in der Atmosphäre und auch bei Regen einen Großteil der Flugzeit bzw. Einsatzzeit frei zu manövrieren. Dazu müssen die Fluggeräte eine ausreichende mechanische Festigkeit, eine ausreichend hohe Flächenbelastung und eine ausreichend hohe Antriebsleistung aufweisen. Diese Anforderungen können dazu führen, dass das Gewicht der Fluggeräte zunimmt, und zwar so, dass eine aus regenerativen Energiequellen an Bord des Fluggerätes gewonnene Energie gegebenenfalls nicht ausreicht, um ein solches Fluggerät über einen Zeitraum von beispielsweise mehreren Tagen ununterbrochen zu betreiben, d. h. in der Luft zu halten. Das Bereitstellen von Energiespeichern in Form von Batterien kann diesem Ziel unter Umständen zuwider laufen, da jeglicher Energiespeicher ein bestimmtes Maß an Eigengewicht mit sich bringt, so dass dadurch das Gesamtgewicht des Fluggerätes zusätzlich erhöht werden könnte, was wiederum den Energiebedarf erhöhen kann.

In der DE 10 2011 010 679 A1 ist ein Aufbau und eine Steuerung eines unbemannten Fluggerätes beschrieben. Dabei erfolgt die Energieversorgung eines Antriebs des Fluggerätes durch an Bord befindliche Energiespeicher.

US 5,260,639 beschreibt ein Verfahren und ein System zum Übertragen von Energie an ein Mondfahrzeug. Dabei werden drei Satelliten in einem Orbit um den Mond bereitgestellt welche aus einer Entfernung zwischen etwa 1.800 km und 3.100 km Energie mittels eines Laserstrahls zu dem Mondfahrzeug auf der Mondoberfläche übertragen.

EP 1 566 902 A1 beschreibt eine Vorrichtung zur Versorgung einer mobilen Einheit mit Energie mittels eines Laserstrahls. Die mobile Einheit weist einen Reflektor auf, welcher einen Teil der Laserenergie zurück zu dem Sander reflektiert, so dass aus dem reflektierten Teil des Laserstrahls Informationen gewonnen werden können, um den Sender auf die mobile Einheit auszurichten.

Das Dokument "Active beam position stabilization of pulsed lasers for longdistance ion profile diagnostics at the Spallation Neutron Source (SNS)", Robert A. Hardin et al., Oak Ridge National Laboratory, Oak Ridge, Tennessee 37831 USA, 2011, beschreibt einen Laserstrahl zum Überwachen von Ionenstrahlprofilen. Dabei wird ein Laserstrahlstabilisierungssystem mit einer piezoangetriebenen Spiegelplattform beschrieben.

US 2003/0206350 A1 beschreibt ein System zum Ausführen einer Abweichungskorrektur eines Strahls mit elektromagnetischer Energie. Das System weist ein gelagertes optisches Element zum Empfangen und Korrigieren des Strahls auf.

### Zusammenfassung der Erfindung

Es kann als Aufgabe der Erfindung angesehen werden, die maximale Betriebszeit von Transportmitteln zu erhöhen.

Die Erfindung betrifft ein System zur leitungslosen Fernenergieübertragung gemäß den Merkmalen des Anspruchs 1.. Weiterbildungen der Erfindung ergeben sich aus den abhängigen Ansprüchen und aus der folgenden Beschreibung.

Gemäß einem ersten Aspekt ist eine Sendeeinheit zum leitungslosen Übertragen von Energie mittels eines gebündelten Laserstrahls angegeben, wobei die Sendeeinheit ein Laserfaserbündel mit einer Mehrzahl von Laserfasern, wobei jede Laserfaser ausgeführt ist, einen Laserstrahl abzustrahlen, eine Positionieroptik zum Einstellen einer Abstrahlrichtung des gebündelten Laserstrahls, eine Kollimatorlinse und eine Primärlinse aufweist. Dabei ist die Mehrzahl von Laserfasern ausgeführt, jeweils einen Laserstrahl abzustrahlen, der die Positionieroptik, die Kollimatorlinse und die Primärlinse durchdringt, so dass der von der Sendeeinheit abgestrahlte Laserstrahl gebündelt abgestrahlt wird.

Die Sendeeinheit kann in einer Ausführungsform insbesondere so ausgeführt sein, dass jeder Laserstrahl die Positionieroptik, die Kollimatorlinse und die Primärlinse in dieser Reihenfolge durchdringt.

Durch diesen Aufbau der Sendeeinheit und durch diese Anordnung der Positionieroptik, der Kollimatorlinse und der Primärlinse wird das Bereitstellen eines gebündelten Laserstrahls ermöglicht, wobei der gebündelte Laserstrahl in einer Entfernung von beispielsweise bis zu 10 km eine minimale Fläche einer Empfangseinheit bestrahlt bzw. auf eine minimale Ausdehnung dieser Empfangsfläche auftrifft. In anderen Worten ermöglicht also gerade der angegebene Aufbau der Sendeeinheit, dass der von der Sendeeinheit bereitgestellte gebündelte Laserstrahl eine hohe Energiedichte pro bestrahlte Flächeneinheit selbst in großen Entfernungen von mehreren Kilometern, beispielsweise 10 km, ermöglicht.

Das Laserfaserbündel kann in einer Ausführungsform beispielsweise sieben Laserfasern aufweisen, wobei die Laserstrahlen sämtlicher Laserfasern durch eine gemeinsame Feldlinse geführt werden, die in der Nähe der Laserfaserapertur angeordnet ist und alles Licht, das aus den Laserfasern austritt auf die Primärlinse abbildet, und so durch die Feldlinse und die Primärlinse zu einem einzelnen gebündelten Laserstrahl zusammengefasst werden, der in großer Entfernung scharf fokussiert auf dem Laserempfänger abgebildet wird.

Gemäß einer Ausführungsform weist die Sendeeinheit zumindest eine um zwei zueinander orthogonale Achsen schwenkbare kardanische Aufhängung zur Aufnahme von zumindest einem Element aus der Gruppe von optischen Elementen bestehend aus dem Laserfaserbündel, der Positionieroptik, der Feldlinse und der Primärlinse auf.

Auf dem Kardanrahmen kann eine Sichtlinienstabilisierungseinheit bestehend aus einem Laserkreiselgestützten GPS System und Servoantrieben für die beiden Kardanachsen angeordnet sein, die die korrekte Ausrichtung der Sichtlinie auf den Empfänger bei niedrigen Bewegungsfrequenzen unter 10 Hz vornimmt. Die Feinstabilisierung der Sichtlinie gegen hochfrequente Störungen bis 100 Hz mit sehr kleiner Amplitude von milli- bis mikro- radian wird durch eine schwenkbare dicke Glasplatte mit Piezoantrieb direkt vor der Bildfeldebenungsoptik bewirkt, die durch eine koaxial aufgebaute Kamera, die bis zu 500 Bildern pro Sekunde liefern kann und die einen Retroreflektor an dem Laserempfänger verfolgt und durch eine entsprechende Steuereinheit die Glasplatte so nachstellt, dass die Sichtlinie immer genau auf den Retroreflektor ausgerichtet ist mit einer Genauigkeit von mindestens 50 mikro-radian.

Die stabilisierte kardanische Aufhängung und die Feinstabilisierung ermöglichen eine genaue Positionierung und Ausrichtung der Sendeeinheit sowie des gebündelten Laserstrahls, welche auf Grund der weiten Übertragungsstrecke des gebündelten Laserstrahls erforderlich ist.

Gemäß einer weiteren Ausführungsform weist die Sendeeinheit eine Bildfeldebenungsoptik auf, welche zwischen der Feldlinse und der Primäroptik angeordnet ist, und durch eine bessere optische Korrektur einen kleineren Brennfleck am Empfänger, und damit einen kleineren, leichteren Empfänger ermöglicht.

Die Bildfeldebenungs- und Korrektur- Optik ermöglicht das Bereitstellen eines homogenen gebündelten fokussierten Laserstrahls am Empfänger mit beugungsbegrenztem Durchmesser und vermindert oder eliminiert dadurch Energieverluste, indem die Streuverluste durch gestreute oder abgelenkte Laserstrahlen reduziert werden.

Gemäß einer weiteren Ausführungsform weist die Sendeeinheit eine Mehrzahl von Umlenkspiegeln und mindestens eine Linsengruppe zur Brennweitenverlängerung in dem zweiten Strahlengang auf, die bei Bedarf in den Strahlengang eingeschwenkt werden können, welche mit der Bildfeldebenungsoptik zwischen der Feldlinse und der Primärlinse so angeordnet sind, dass die Sendeeinheit bei Bedarf einen gefalteten Strahlengang mit einer verlängerten Brennweite aufweist.

Durch den Einsatz von Umlenkspiegeln und dem Bereitstellen einer verlängerten Brennweite kann beispielsweise eine veränderte Übertragungsentfernung für die zu übertragende Energie erzielt und berücksichtigt werden.

Gemäß einer weiteren Ausführungsform weist die Sendeeinheit eine Überwachungseinheit auf, welche ausgeführt ist, einen in Richtung der Abstrahlrichtung des gebündelten Laserstrahls vor der Sendeeinheit befindlichen Überwachungsbereich zu überwachen, wobei die Überwachungseinheit ausgeführt ist, das Aussenden des gebündelten Laserstrahls durch die Sendeeinheit zu unterbrechen, wenn ein Objekt in den Überwachungsbereich eindringt.

Bei der Überwachungseinheit handelt es sich damit um einen Mechanismus bzw. um eine Vorrichtung, welche die Betriebssicherheit einer Sendeeinheit wie oben und im Folgenden beschrieben erhöhen kann. Insbesondere kann die Überwachungseinheit ausgeführt sein, das Eindringen von Fluggeräten oder beispielsweise Vögeln in den Überwachungsbereich zu detektieren.

Gemäß einer weiteren Ausführungsform weist die Überwachungseinheit eine Nahbereichsüberwachungseinheit und eine Weitbereichsüberwachungseinheit auf.

Die Nahbereichsüberwachungseinheit und die Weitbereichsüberwachungseinheit unterscheiden sich dabei in der Ausgestaltung ihrer Detektionsvorrichtungen, welche jeweils auf die ihnen zugewiesenen Entfernungen abgestimmt sein können.

Gemäß einem weiteren Aspekt ist ein Transportmittel mit einer Empfangseinheit zum Empfangen eines gebündelten Laserstrahls, welcher von einer Sendeeinheit wie oben und im Folgenden beschrieben ausgesandt wurde, angegeben. Die Empfangseinheit weist eine Strahlungsenergieaufnahmeeinheit auf, welche ausgeführt ist, den von der Sendeeinheit ausgestrahlten gebündelten Laserstrahl aufzunehmen und in elektrische Energie umzuwandeln, wobei die elektrische Energie zum Versorgen eines Antriebs des Transportmittels mit elektrischer Energie vorgesehen ist.

Damit kann es dem Transportmittel ermöglicht werden, eine Betriebszeit bzw. Einsatzzeit zu erreichen, die nicht von dem Vorhandensein gespeicherter Energie an Bord abhängig ist, da die für den Antrieb benötigte Energie von der Empfangseinheit aus dem durch die Sendeeinheit ausgestrahlten gebündelten Laserstrahl gewonnen wird.

Gemäß einer Ausführungsform weist die Empfangseinheit einen Retroreflektor auf, der ausgeführt ist, einen kleinen Teil der Laserenergie des Senders vom Empfänger als Positionierungsstrahl in Richtung der Sendeeinheit zurück zu reflektieren, wobei der Positionierungsstrahl so ausgeführt ist, mit Hilfe der Feinstabilisierungseinheit eine hochgenaue Ausrichtung der Sendeeinheit in Richtung der Empfangseinheit vorzunehmen, so dass der gebündelte Laserstrahl auf eine vorgegebene Empfangsfläche der Empfangseinheit abgestrahlt wird.

In anderen Worten dient der Reflektor damit einer Ausrichtung bzw. Nachführung der Sendeeinheit entlang der Bewegungslinie des Transportmittels, so dass der von der Sendeeinheit ausgestrahlte Hochleistungslaserstrahl stets auf die Empfangsfläche der Empfangseinheit auftrifft. Hierzu ist die Sendeeinheit ausgeführt, einen Teil des Hochleistungsstrahles auf den in der Mitte des Empfängers angebrachten Retroreflektor zu strahlen, wobei durch die Reflexion des Positionierungsstrahls durch den Reflektor ein Nachführen bzw. Ausrichten der Sendeeinheit auf den Empfänger ermöglicht wird.

Gemäß einer weiteren Ausführungsform ist die Empfangsfläche zum Empfangen des gebündelten Laserstrahls kreisförmig und kardanisch aufgehängt, und kann so immer auf den Sender ausgerichtet werden, und weist einen Durchmesser von maximal 0,5 m auf, der von einem Kleinfluggerät noch gut in einer aerodynamisch verkleideten Hülle mitgeführt werden kann.

Der Durchmesser der Empfangsfläche kann in einer Ausführungsform 0,5 m sein. In einer anderen Ausführungsform ist der Durchmesser kleiner als 0,5 m.

Damit wird das Bereitstellen einer Empfangseinheit mit geringen Ausmaßen ermöglicht, so dass die Empfangseinheit im Zusammenhang mit einem Transportmittel von geringen Ausmaßen und insbesondere Kleinflugzeug verwendet werden kann. Gerade die Verwendung einer kleinen Empfangsfläche, beispielsweise des gegebenen Ausmaßes, erfordert eine hochgenaue Ausrichtung der Empfangseinheit und der Sendeeinheit, so dass der von der Sendeeinheit abgestrahlte gebündelte Laserstrahl zum ersten genau auf den Empfänger fokussiert ist als reelles Bild und zum zweiten hochgenau auf die Empfangseinrichtung gerichtet werden kann.

Gemäß einer weiteren Ausführungsform weist das Transportmittel ein transparentes stromlinienförmiges Gehäuse zur Aufnahme der Empfangseinheit auf, wobei die Empfangseinheit in dem Gehäuse kardanisch aufgehängt ist.

In analoger Weise zu der Sendeeinheit ermöglicht die kardanische Aufhängung der Empfangseinheit in dem Gehäuse eine gute Stabilisierung und Ausrichtung der Empfangseinheit zum Empfang des gebündelten Laserstrahls.

Bei der Empfangseinheit kann es sich um einen Solargenerator handeln, wobei dieser in einem Gehäuse angeordnet ist, welches als tropfenförmige geschlossene Schutzhülle mit Laminarprofil auf dessen äußeren Oberfläche und bestehend aus einer durchsichtigen Folie angeordnet ist.

Wenn der Solargenerator immer senkrecht zur Sichtlinie, d.h. zu der Verbindungslinie zwischen der Sendeeinheit und der Empfangseinheit, ausgerichtet werden kann, können Drei-Schicht-Solarzellen mit einer Konzentratoroptik verwendet werden , die einen doppelt so hohen Wirkungsgrad haben wie normale Ein-Schicht-Solarzellen.

Gemäß einer weiteren Ausführungsform ist das Gehäuse zur Stabilisierung mit einem Überdruck im Vergleich zu einem außerhalb des Gehäuses vorherrschenden Atmosphärendruck beaufschlagbar.

Dies ermöglicht es, dass das Gehäuse bei sehr geringer Wandstärke und geringem Gewicht eine vorgegebene Form beibehält, so dass ein die Gehäusewand durchdringender gebündelter Laserstrahl nicht in unvorhergesehener und unerwünschter Weise abgelenkt wird.

Gemäß einer weiteren Ausführungsform weist das Transportmittel eine aufladbare Batterie auf, welche ausgeführt ist, mittels der von der Empfangseinheit empfangenen Energie geladen zu werden, wobei die Batterie ausgeführt ist, elektrische Energie zum Versorgen des Antriebs des Transportmittels bereitzustellen, wenn die von der Laserempfangseinheit bereitgestellte Energie einen vorgegebenen Wert unterschreitet.

Gemäß einer weiteren Ausführungsform ist das Transportmittel an seiner Oberseite mit Solarzellen bestückt, die bei ausreichender Sonneneinstrahlung einen wesentlichen Teil der Betriebsenergie liefern können und tagsüber sogar noch Energie zur Speicherung in den Batterien liefern können. Die Ausführung mit Hybridantrieb durch Solarenergie und Laserenergie vom Boden mit Zwischenspeicherung in den Batterien ergibt ein besonders leistungsfähiges und flexibles, zeitlich praktisch unbegrenzt einsetzbares Transportmittel, das mit der Solarenergiekomponente und der Batterispeicherung auch weite Ausflüge ausserhalb der Reicheite der Laserenergieversorgungsreichweite von bis zu 100 km bei Nacht und bis zu 300 km bei Tag unternehmen kann.

Die aufladbare Batterie kann damit insbesondere zum Überbrücken von Zeitabschnitten genutzt werden, in denen eine Übertragung von Energie mittels des Laserstrahls beispielsweise aufgrund des Wetters oder aufgrund einer Trennung der optischen Sichtlinie zwischen der Sendeeinheit und der Empfangseinheit negativ beeinträchtigt ist, und auch keine Solarenergie zur Verfügung steht..

Gemäß einer weiteren Ausführungsform ist das Transportmittel ausgeführt als Fluggerät und insbesondere als unbemanntes Fluggerät.

Gemäß einem weiteren Aspekt ist ein System zur leitungslosen Fernenergieübertragung mittels eines Hochleistungslasers angegeben, wobei das System eine Sendeeinheit und eine Empfangseinheit jeweils wie oben und im Folgenden beschrieben aufweist.

Dabei kann die Sendeeinheit einer stationären Einrichtung und die Empfangseinheit einer mobilen Einrichtung zugeordnet sein, wobei die Energie von der stationären Einrichtung zu der mobilen Einrichtung übertragen wird.

Das System kann eine Mehrzahl von stationären Einrichtungen mit jeweils einer oder mehreren Sendeeinheiten aufweisen, wobei die mobile Einrichtung ausgeführt sein kann, Energie jeweils von der örtlich am nächstgelegenen stationären Einrichtung zu empfangen. Handelt es sich bei der mobilen Einrichtung um ein unbemanntes Fluggerät, so kann dessen Flugroute vorgegeben sein oder beispielsweise von einer Bodenstation ausgeführt werden. Dabei können das unbemannte Fluggerät und sämtliche Bodenstationen mit Datenübertragungsstrecken untereinander verbunden sein, um beispielsweise die Position und die Flugdaten des unbemannten Fluggerätes zu übermitteln.

In anderen Worten erfolgt die hochgenau gerichtete Sendung der Energie mittels eines gebündelten Laserstrahls durch eine Sendeeinheit mittels eines langbrennweitigen Spiegelteleskops mit einer Kollimatoreinrichtung und einem Verbund von mehreren kaskadierten Hochleistungsdiodenlasern mit Auskopplung der Laserstrahlung in den gemeinsamen Kollimator durch Lichtleitfasern in der Bildebene des Spiegelteleskops und durch Abbildung der Laserfaserenden-Bildebene auf den Empfängersolargenerator des Fluggerätes in z. B. 5 bis 10 km Entfernung zu der Sendeeinheit. Die Anzahl der Hochleistungsdiodenlaser kann in Abhängigkeit der benötigten Energiemenge variieren. In einer Ausführungsform werden sieben kaskadierte Hochleistungsdiodenlaser mit zusammen 4,2 Kilowatt Lichtleistung bereitgestellt, deren Laserstrahlung durch Lichtleitfasern mit einer Dicke von 200 Mikrometern in den Kollimator ausgekoppelt wird.

Um eine auf hohe Entfernungen genaue Ausrichtung der Sendeeinheit zu ermöglichen, muss die Sichtlinie der Primärlinse hochgenau stabilisiert werden, beispielsweise auf 50 Mikro - Radian. Bei der Primärlinse kann es sich beispielsweise um ein Spiegelteleskop handeln. Die Stabilisierung des Spiegelteleskops geschieht im ersten Schritt durch Lagerung der Montierung des Spiegelteleskops auf einer vibrationsisolierten und winkelstabilisierten Plattform. Die Montierung des Spiegelteleskops schwenkt im zweiten Schritt das Spiegelteleskop um zwei Achsen nach Winkeln aus einem GPS-INS-System, das auf der Plattform angeordnet ist, und richtet die Teleskopsichtlinie auf den Reflektor an der Empfangseinheit aus, was beispielsweise mit Hilfe eines Führungsmechanismus erfolgen kann, der den Reflektor verfolgt. Weiterhin können kleine hochfrequente Sichtlinienstörungen, die die Montierung aufgrund der Trägheit des Spiegelteleskops nicht auszuregeln vermag, durch eine FeinStabilisierungseinheit im Strahlengang des Laserstrahls ausgeregelt werden, so dass die Sichtlinie mit einer Genauigkeit von 50 Mikro - Radian auf den Reflektor ausgerichtet bleibt.

Der Empfängersolargenerator der Empfangseinheit ist in einer in zwei Achsen schwenkbaren, winkelstabilisierten Montierung angebracht, die den Solargenerator auf ein Grad genau auf die Sendeeinheit ausrichten kann.

Der Solargenerator kann aus einem Mosaik von Solarzellen aufgebaut sein, beispielsweise mit einem Durchmesser von 0,5 m. Der Solargenerator kann auch einen größeren oder einen kleineren Durchmesser aufweisen, wobei sich der Durchmesser bzw. die Ausmaße des Solargenerators an dem Energiebedarf und den Ausmaßen des Fluggerätes orientieren können. Die Solarzellen können Triple-Junction InGaP-InGaAs-Ge Solarzellen mit vorgeschalteter Sammellinse als Konzentrator um einen Faktor von z.B. 100 mit integrierter Kühlung der Solarzellen sein.

Die Laserdioden können beispielsweise auf einer Sendewellenlänge von 0,976 Mikrometern senden und die Empfangswellenlänge der Ge-Solarzellenschicht kann ebendort so abgestimmt sein, dass auch die Ge-Solarzelle dort ihren größten Quantennutzungsgrad und einen hohen Wirkungsgrad hat, so dass das Gesamtsystem zum leitungslosen Übertragen von Energie mittels eines gebündelten Laserstrahls einen hohen Gesamtwirkungsgrad erreicht. Weiterhin ist bei dieser Wellenlänge ein gutes atmosphärisches Fenter vorhanden, das bei einer Übertragungsdistanz von 5 km bis zu 60% Transmission aufweist.

Das Gehäuse für die Empfangseinheit kann so ausgeführt sein, dass der Empfängersolargenerator in einem tropfenförmigen Gehäuse mit Laminarprofil auf seiner äußeren Oberfläche, beispielsweise das Gehäuse bestehend aus durchsichtiger MYLAR Folie, die durch Innendruck stabilisiert sein kann, und die an der Unterseite des unbemannten Fluggerätes angebracht sein kann. Damit ermöglicht das Gehäuse eine ungehinderte Rundumsicht, d. h. eine ungehinderte optische Sichtverbindung der Empfangseinheit zu der Sendeeinheit.

Die Sendeeinheit und die Empfangseinheit wie oben und im Folgenden beschrieben ermöglichen auf besonders vorteilhafte Weise, unbemannte Kleinfluggeräte von beispielsweise 5 bis 25 kg Gewicht in niedrigen Lufthöhen von 5 km bis 10 km bei Tag und bei Nacht mit Energie zu versorgen, so dass die zur Verfügung stehende Energie für den Antrieb des Kleinfluggerätes kein begrenzender Parameter für die Flugzeit bzw. Einsatzzeit des Kleinfluggerätes darstellt.

Die Sendeeinheit und die Empfangseinheit liefern genügend Energie, um Reserven für schlechtes Wetter und Nutzlastsensorenbetrieb des Fluggerätes zu haben und um an Bord des Fluggerätes befindliche aufladbare Batterien aufladen zu können. Dadurch kann das Fluggerät unempfindlich gegen Störungen sein und kann ebenso in einen Flugbereich außerhalb der Reichweite der Sendeeinheit bzw. in Abschattungsgebiete für begrenzte Zeit einfliegen. Die Energieversorgung des Fluggerätes wird tagsüber bei ausreichender Sonneneinstrahlung durch Solarzellen auf der Oberseite des Fluggerätes ergänzt. Dadurch kann sich das Fluggerät tagsüber auch weit ausserhalb der Reichweite des Lasersenders bewegen.

Durch die Verwendung von fasergekoppelten kaskadierten Hochleistungsdiodenlasern mit der oben und im Folgenden beschriebenen Sendeeinheit kann die Laserstrahlenergie in einem sehr schmalen Strahl mit beispielsweise einem Öffnungswinkel von 0,1 Milli-Radian auf einen Empfänger mit beispielsweise 0,5 m Durchmesser in beispielsweise 5 km Entfernung gebündelt werden und kann durch die Anordnung einer Nachführvorrichtung mit Korrekturoptik im Teleskopstrahlengang und eines Reflektors unterhalb des Empfängersolargenerators auf bis zu 0,01 Milli-Radian genau auf den Empfängersolargenerator ausgerichtet werden. Dadurch kann beispielsweise ein kleiner und leichter und leicht einbaubarer Empfängersolargenerator für ein unbemanntes Kleinflugzeug verwendet werden.

Durch die rechtwinklige bzw. senkrechte Ausrichtung des nachführbaren Empfängersolargenerators zum gebündelten Laserstrahl kann die durch den gebündelten Laserstrahl übertragene Leistung maximiert werden.

Im Folgenden werden mit Verweis auf die Figuren Ausführungsbeispiele der Erfindung beschrieben.

### Kurze Beschreibung der Figuren

Fig. 1 zeigt eine Energieübertragungseinheit mit einer Sendeeinheit gemäß einem Ausführungsbeispiel der Erfindung.
Fig. 2 zeigt eine Energieübertragungseinheit mit einer Sendeeinheit gemäß einem weiteren Ausführungsbeispiel der Erfindung.
Fig. 3 zeigt eine Energieübertragungseinheit mit einer Sendeeinheit gemäß einem weiteren Ausführungsbeispiel der Erfindung.
Fig. 4 zeigt ein Fluggerät gemäß einem weiteren Ausführungsbeispiel der Erfindung.

### Detaillierte Beschreibung von Ausführungsbeispielen

Die Darstellungen in den Figuren sind schematisch und nicht maßstabsgetreu. Werden in der folgenden Figurenbeschreibung gleiche Bezugsziffern verwendet, so betreffen diese gleiche oder ähnliche Elemente.

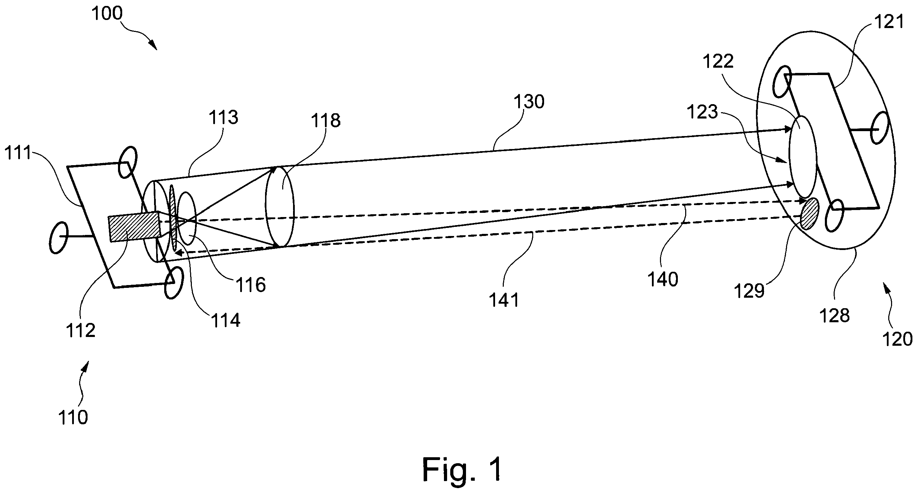

Fig. 1 zeigt eine Energieübertragungsvorrichtung 100 mit einer Sendeeinheit 110 und einer Empfangseinheit 120. Die Sendeeinheit weist ein Laserfaserbündel 112, eine Positionieroptik 114, eine Kollimatorlinse 116 und eine Teleskoplinse 118 auf, wobei diese Elemente mittels der Aufhängung 111 kardanisch aufgehängt sind.

Die Positionieroptik 114, die Kollimatorlinse 116 und die Teleskoplinse 118 können baulich in Form eines Teleskops 113 zusammengefasst sein.

Die Sendeeinheit 110 ist ausgeführt, einen gebündelten Laserstrahl 130 in Richtung der Empfangseinheit 120 abzustrahlen. Weiterhin ist die Sendeeinheit ausgeführt, einen Positionierungsstrahl 140 in Richtung der Empfangseinheit 120 abzustrahlen, wobei der Positionierungsstrahl in Form des Rückmeldungsstrahls 141 von der Empfangseinheit reflektiert wird und dem Ausrichten und Nachführen der Sendeeinheit in Richtung der Empfangseinheit dient.

Die Empfangseinheit weist eine Strahlungsenergieaufnahmeeinheit 122 in Form eines Solargenerators auf, welcher über eine Empfangsfläche 123 verfügt, auf welche der gebündelte Laserstrahl 130 auftrifft. Der Solargenerator 122 ist ausgeführt, den auf die Empfangsfläche 123 auftreffenden gebündelten Laserstrahl in elektrische Energie umzuwandeln.

Die Empfangseinheit weist einen Reflektor 129 auf, welcher ausgeführt ist, den Positionierungsstrahl 140 in Form des Rückmeldungsstrahls 141 in Richtung der Sendeeinheit zu reflektieren.

Der Solargenerator 122 und der Reflektor 129 sind mittels der Aufhängung 121 kardanisch aufgehängt.

Die Empfangseinheit 120 ist in dem Gehäuse 128 angeordnet. Das Gehäuse 128 besteht vorzugsweise aus einer transparenten Folie, welche mit einem Innendruck beaufschlagt ist.

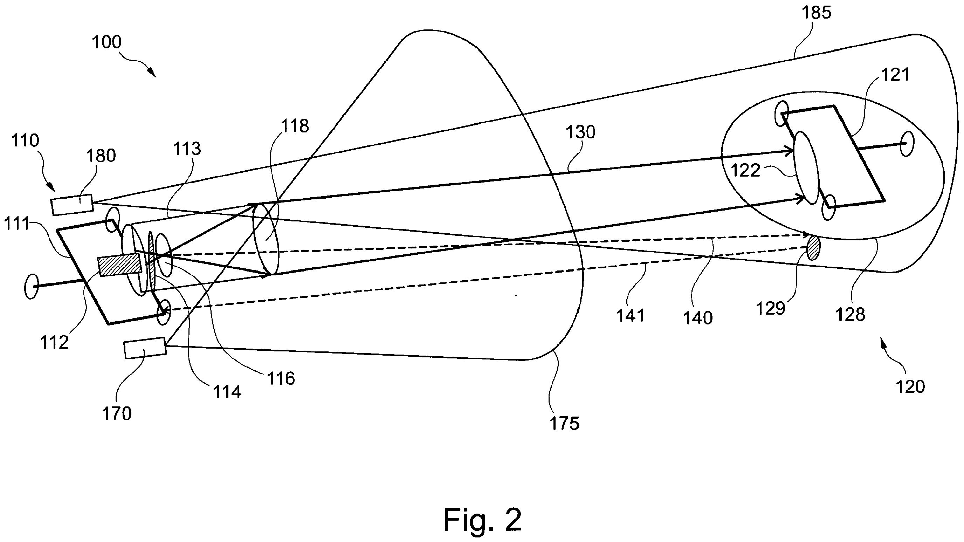

Fig. 2 zeigt eine Energieübertragungsvorrichtung 100 mit einer Sendeeinheit 110 und einer Empfangseinheit 120 vergleichbar zu der Darstellung in Fig. 1. Die in Fig. 2 gezeigte Sendeeinheit 110 weist eine Nahbereichsüberwachungseinheit 170 und eine Weitbereichsüberwachungseinheit 180 auf, welche jeweils ausgeführt sind, einen Überwachungsbereich 175 bzw. 185, welcher sich in einem Übertragungsbereich des gebündelten Laserstrahls 130 zwischen der Sendeeinheit 110 und der Empfangseinheit 120 befindet, zu überwachen. Wie aus Fig. 2 deutlich hervorgeht, überschneiden sich die Überwachungsbereiche 175 und 185 so, dass der gesamte, zwischen der Sendeeinheit und der Empfangseinheit befindliche und für die Übertragung des gebündelten Laserstrahls vorgesehene Raum von zumindest einer der Überwachungseinheiten 170 und 180 erfasst wird.

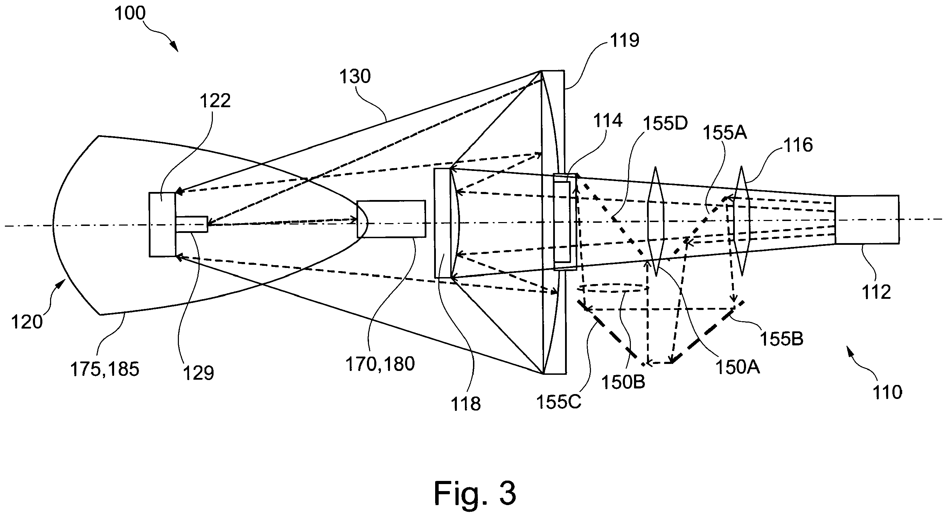

Fig. 3 zeigt eine Energieübertragungsvorrichtung 100 mit einer Sendeeinheit 110 und einer Empfangseinheit 120. Die Sendeeinheit 110 weist ein Laserfaserbündel 112, eine Positionieroptik 114, eine Kollimatorlinse 116, eine Teleskoplinse 118 und einen Primärspiegel 119 auf. Zwischen der Kollimatorlinse und der Positionieroptik ist eine Planfeldoptik 150A, 150B angeordnet. Dabei stellen die Planfeldoptiken 150A, 150B alternative Brennweiteneinstellungen der Optik der Sendeeinheit dar. Wird eine längere Brennweite benötigt, so werden in der Optik der Sendeeinheit 110 Umlenkspiegel 155A, 155B, 155C, 155D eingesetzt, wobei die Umlenkspiegel die Laserstrahlen des Laserfaserbündels 112 über die Planfeldoptik 150B lenken.

Die Kollimatorlinse bzw. die Kollimationsoptik dient der Abbildung der Laserfasern auf dem Primärspiegel und die Planfeldoptik kann verhindern, dass ein Brennfleck in dem Laserstrahl entsteht.

Die Kollimatorlinse kann beispielsweise eine Brennweite von 24 mm und einen Durchmesser von 5 bis 8 mm, insbesondere 6,8 mm aufweisen. Die Primärlinse kann in einem Ausführungsbeispiel einen Durchmesser von 305 mm und eine Brennweite von 6 m (für eine Entfernung von 5 km zwischen der Empfangseinheit und der Sendeeinheit) und 12 m (für eine Entfernung von 10 km zwischen der Empfangseinheit und der Sendeeinheit) aufweisen. Bei der Positionieroptik handelt es sich um eine Vorrichtung zum Ausstrahlen und Ausrichten von optischen Strahlen und insbesondere Laserstrahlen.

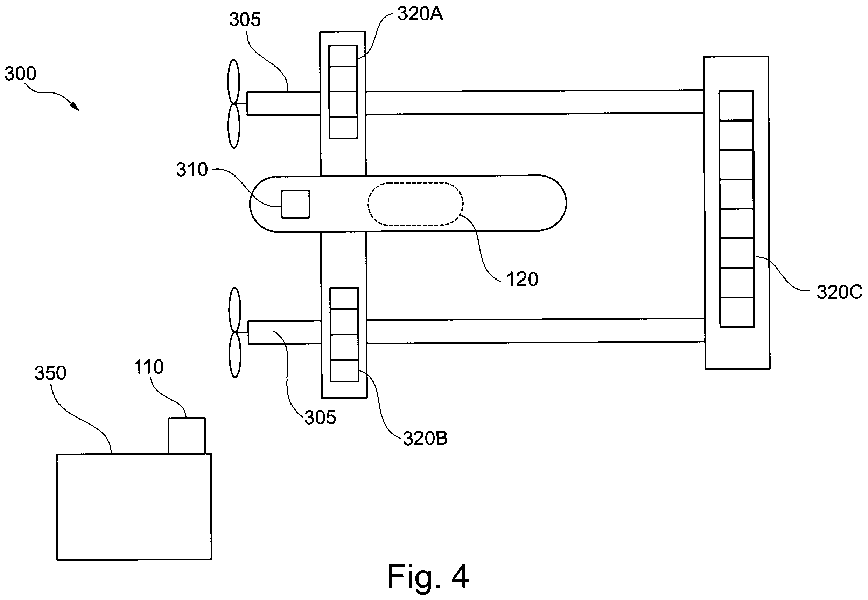

Fig. 4 zeigt ein Fluggerät 300, welches von zwei Antrieben 305 angetrieben wird. Bei dem Fluggerät kann es sich insbesondere um ein unbemanntes Kleinfluggerät zu Aufklärungszwecken handeln. Zur Energieversorgung der Antriebseinheiten 305 weist das Fluggerät 300 eine Empfangseinheit 120 wie oben und im Folgenden beschrieben, eine aufladbare Batterie 310 und drei Solarzellen 320A, 320B und 320C auf.

Die Empfangseinheit 120 ist ausgeführt, Energie mittels eines gebündelten Laserstrahls von der Sendeeinheit 110 zu empfangen, wobei die Sendeeinheit 110 an einer Bodenstation 350 angeordnet ist.

Das Fluggerät 300 kombiniert damit mehrere Energieversorgungsquellen in Form einer Empfangseinheit wie oben und im Folgenden beschrieben, einer an Bord befindlichen aufladbaren Batterie und Solarzellen, wobei sowohl die Empfangseinheit als auch die Solarzellen dazu ausgeführt sein können, der aufladbaren Batterie Energie zuzuführen, so dass das Fluggerät bei einem Ausfall oder einer Störung der Energieversorgung über die Empfangseinheit oder über die Solarzellen mittels der Energie aus der aufladbaren Batterie angetrieben werden kann.

Neben dem Betrieb der Antriebseinheiten 305 können die Empfangseinheit, die aufladbare Batterie und die Solarzellen Energie für eine an Bord des Fluggerätes befindliche Elektronik liefern.

Das Fluggerät kann ein unbemanntes Kleinflugzeug mit einer Flügelspannweite von 3 bis 6 m und insbesondere 4,5 m sein, eine Flügelfläche von ca. 1,0 qm und ein Gewicht von 8 kg aufweisen, was einer Flächenbelastung von 8 kg pro qm entspricht. Das Fluggerät kann ausgeführt sein, bei einer Fluggeschwindigkeit zwischen 40 und 70 km/h und insbesondere 60 km/h betrieben zu werden. Für den Antrieb des Fluggerätes können damit in einem Ausführungsbeispiel bis zu 200 Watt an elektrischer Energie benötigt werden, wobei die Sendeeinheit zum Senden bzw. die Empfangseinheit zum Empfangen eines Laserstrahls ausgeführt ist, welcher den Solargenerator zum Erzeugen dieser benötigten elektrischen Energie bestrahlt.

In einem weiteren Ausführungsbeispiel kann der Solargenerator der Empfangseinheit ausgeführt sein, bis zu 2100 Watt an optischer Leistung zu empfangen und entsprechend des Wirkungsgrades bis zu 580 Watt an elektrischer Leistung zur Verfügung zu stellen. Diese Leistungsangaben können sich auf eine Entfernung von ca. 5 km zwischen der Sendeeinheit und der Empfangseinheit beziehen, so dass für das Fluggerät ein großer Operations- bzw. Flugradius ermöglicht wird.

### Bezugszeichenliste

- 100: Energieübertragungsvorrichtung
- 110: Sendeeinheit
- 111: Aufhängung
- 112: Laserfaserbündel
- 113: Teleskop
- 114: Positionieroptik
- 116: Feldlinse
- 118: Teleskoplinse
- 119: Primärspiegel
- 120: Empfangseinheit
- 121: Aufhängung
- 122: Strahlungsenergieaufnahmeeinheit
- 123: Empfangsfläche
- 128: Gehäuse
- 129: Retroreflektor
- 130: Laserstrahl
- 140: Positionierungsstrahl
- 141: Rückmeldungsstrahl
- 150A: Bildfeldebenungs- und Korrekturoptik
- 150B: Bildfeldebenungs- und Korrekturoptik
- 155A: Umlenkspiegel
- 155B: Umlenkspiegel
- 155C: Umlenkspiegel
- 155D: Umlenkspiegel
- 170: Nahbereichsüberwachungseinheit
- 175: Überwachungsbereich
- 180: Weitbereichsüberwachungseinheit
- 185: Überwachungsbereich
- 300: Fluggerät
- 305: Antrieb
- 310: Batterie
- 320A: Solarzelle
- 320B: Solarzelle
- 320C: Solarzelle
- 350: Bodenstation

## Patentansprüche

1. System zur leitungslosen Fernenergieübertragung, aufweisend eine Sendeeinheit (110) und ein Fluggerät,
wobei die Sendeeinheit aufweist:
ein Laserfaserbündel (112) mit einer Mehrzahl von Laserfasern, wobei jede Laserfaser ausgeführt ist, einen Laserstrahl abzustrahlen;
eine Positionieroptik (114) zum Einstellen einer Abstrahlrichtung des gebündelten Laserstrahls;
eine Feldlinse (116);
eine Primärlinse (118);
wobei die Mehrzahl von Laserfasern ausgeführt ist, jeweils einen Laserstrahl abzustrahlen, der die Positionieroptik, die Feldlinse und die Primärlinse durchdringt, so dass der von der Sendeeinheit abgestrahlte Laserstrahl gebündelt abgestrahlt wird;
wobei die Sendeeinheit weiter aufweist:
eine Bildfeldebnungs- und Korrekturoptik (150A, 150B), welche zwischen der Feldlinse und der Positionieroptik angeordnet ist;
wobei das Fluggerät (300) eine Empfangseinheit (120) aufweist, die zum Empfangen des gebündelten Laserstrahls ausgeführt ist, welcher von der Sendeeinheit ausgesandt wurde;
wobei die Empfangseinheit eine Strahlungsenergieaufnahmeeinheit (122) aufweist, welche ausgeführt ist, den von der Sendeeinheit abgestrahlten gebündelten Laserstrahl aufzunehmen und in elektrische Energie umzuwandeln;
wobei die elektrische Energie zum Versorgen eines Antriebs des Fluggerätes mit elektrischer Energie vorgesehen ist;
wobei die Sendeeinheit (110) und das Fluggerät über eine Datenübertragungsstrecke miteinander verbunden sind;
wobei das Fluggerät ausgeführt ist, eine Position des Fluggeräts über die Datenübertragungsstrecke an die Sendeeinheit (110) zu senden;
wobei die Sendeeinheit (110) nach Winkeln aus einem GPS-INS-System auf die Position des Fluggeräts ausrichtbar ist;
wobei die Empfangseinheit einen Retroreflektor (129) aufweist, der ausgeführt ist, einen Positionierungsstrahl (140) in Richtung der Sendeeinheit zu reflektieren, um somit ein Nachführen der Sendeeinheit (110) auf den Empfänger zu ermöglichen.

2. System nach Anspruch 1,
wobei die Empfangsfläche kreisförmig ist und einen Durchmesser von maximal 0,5 m aufweist.

3. System nach einem der Ansprüche 1 bis 2, aufweisend
ein transparentes Gehäuse (128) zur Aufnahme der Empfangseinheit;
wobei die Empfangseinheit in dem Gehäuse kardanisch aufgehängt ist.

4. System nach Anspruch 3,
wobei das transparente Gehäuse zur Stabilisierung mit einem Überdruck im Vergleich zu einem außerhalb des Gehäuses vorherrschenden Atmosphärendruck beaufschlagbar ist.

5. System nach einem der Ansprüche 1 bis 4,
wobei das Fluggerät weiterhin eine aufladbare Batterie (310) aufweist, welche ausgeführt ist, mittels der von der Empfangseinheit empfangenen Energie geladen zu werden;
wobei die Batterie ausgeführt ist, elektrische Energie zum Versorgen des Antriebs des Fluggerät bereitzustellen, wenn die von der Empfangseinheit bereitgestellte Energie einen vorgegebenen Wert unterschreitet.

6. System nach einem der Ansprüche 1 bis 5,
weiterhin aufweisend einen Solargenerator an der Oberseite (320A, 320B, 320C), welcher ausgeführt ist, mittels der von der Sonneneinstrahlung empfangenen Energie Strom zu erzeugen für den Betrieb und die Speicherung in der Batterie

## Claims

1. System for wireless remote power transfer, comprising
a transmitter unit (110) and an aircraft,
wherein the transmitter unit has:
a laser fibre bundle (112) with a plurality of laser fibres, wherein each laser fibre is embodied to emit a laser beam;
a positioning optical unit (114) for adjusting an emission direction of the focused laser beam;
a field lens (116);
a primary lens (118);
wherein the plurality of laser fibres are embodied to each emit a laser beam that passes through the positioning optical unit, the field lens and the primary lens such that the laser beam emitted by the transmitter unit is emitted in focused fashion;
wherein the transmitter unit further has:
an image field flattening and correction optical unit (150A, 150B), which is disposed between the field lens and the positioning optical unit;
wherein the aircraft (300) has a receiver unit (120) which is embodied to receive the focused laser beam that was emitted by the transmitter unit;
wherein the receiver unit has a radiation power reception unit (122), which is embodied to receive the focused laser beam emitted by the transmitter unit and convert said focused laser beam into electrical energy;
wherein the electrical energy is provided to supply a drive of the aircraft with electrical energy;
wherein the transmitter unit (110) and the aircraft are linked by way of a data transmission path;
wherein the aircraft is embodied to transmit a position of the aircraft to the transmitter unit (110) via the data transmission path;
wherein the transmitter unit (110) is alignable with the position of the aircraft according to angles from a GPS/INS system;
wherein the receiver unit has a retroreflector (121), which is embodied to reflect a position beam (140) in the direction of the transmitter unit in order thus to facilitate tracking of the transmitter unit (110) on the receiver.

2. System according to Claim 1,
wherein the receiver area is circular and has a diameter of no more than 0.5 m.

3. System according to either of Claims 1 and 2, comprising
a transparent housing (128) for receiving the receiver unit;
wherein the receiver unit is gimbal mounted in the housing.

4. System according to Claim 3,
wherein, for stabilisation purposes, the transparent housing can have positive pressure applied thereto in comparison with the atmospheric pressure prevalent outside of the housing.

5. System according to any one of Claims 1 to 4,
wherein the aircraft furthermore has a rechargeable battery (310), which is embodied to be charged with power received by the receiver unit;
wherein the battery is embodied to provide electrical energy for supplying the drive of the aircraft when the energy provided by the receiver unit drops below a specified value.

6. System according to any one of Claims 1 to 5,
furthermore comprising a solar generator in the upper side (320A, 320B, 320C), which is embodied to generate current by means of the power received from the solar irradiation, for operation and for storage in the battery.

## Revendications

1. Système de transmission sans fil d'énergie à distance, comportant une unité émettrice (110) et un engin volant,
dans lequel l'unité émettrice comporte :
un faisceau de fibres laser (112) comprenant une pluralité de fibres laser, dans lequel chaque fibre laser est adaptée pour rayonner un faisceau laser ;
une optique de positionnement (114) pour le réglage d'une direction de rayonnement du faisceau laser concentré ;
une lentille de champ (116) ;
une lentille primaire (118) ;
dans lequel la pluralité de fibres laser est adaptée pour rayonner un faisceau laser qui traverse respectivement l'optique de positionnement, la lentille de champ et la lentille primaire, de telle sorte que le faisceau laser rayonné par l'unité émettrice soit rayonné sous forme concentrée ;
dans lequel l'unité émettrice comporte en outre :
une optique d'aplatissement et de correction du champ d'image (150A, 150B) qui est disposée entre la lentille de champ et l'optique de positionnement ;
dans lequel l'engin volant (300) comporte une unité réceptrice (120) qui est adaptée pour recevoir le faisceau laser concentré ayant été émis par l'unité émettrice ;
dans lequel l'unité réceptrice comporte une unité réceptrice d'énergie rayonnante (122) adaptée pour recevoir le faisceau laser concentré émis par l'unité émettrice et le convertir en énergie électrique ;
dans lequel l'énergie électrique est prévue pour alimenter en énergie électrique un dispositif d'entraînement de l'engin volant ;
dans lequel l'unité émettrice (110) et l'engin volant sont reliés l'un à l'autre par une liaison de transmission de données ;
dans lequel l'engin volant est adapté pour transmettre une position de l'engin volant à l'unité émettrice (110) par l'intermédiaire de la liaison de transmission de données ;
dans lequel l'unité émettrice (110) peut être orientée vers la position de l'engin volant selon des angles provenant d'un système GPS INS ;
dans lequel l'unité réceptrice comprend un rétroréflecteur (129) adapté pour réfléchir un faisceau de positionnement (140) dans la direction de l'unité émettrice pour ainsi permettre la poursuite de l'unité émettrice (110) vers le récepteur.

2. Système selon la revendication 1, dans lequel la surface réceptrice est circulaire et présente un diamètre maximal de 0,5 m.

3. Système selon l'une des revendications 1 à 2, comportant un boîtier transparent (128) destiné à loger l'unité réceptrice ;
dans lequel l'unité réceptrice est montée à la cardan dans le boîtier.

4. Système selon la revendication 3,
dans lequel le boîtier transparent peut être soumis, à des fins de stabilisation, à une surpression par comparaison à une pression atmosphérique régnant à l'extérieur du boîtier.

5. Système selon l'une des revendications 1 à 4,
dans lequel l'engin volant comporte en outre une batterie rechargeable (310) qui est adaptée pour être chargée au moyen de l'énergie reçue par l'unité réceptrice ;
dans lequel la batterie est adaptée pour fournir de l'énergie électrique afin d'alimenter le dispositif d'entraînement de l'engin volant lorsque l'énergie fournie par l'unité réceptrice devient inférieure à une valeur prédéfinie.

6. Système selon l'une des revendications 1 à 5, comportant en outre sur la partie supérieure un générateur solaire (320A, 320B, 320C) qui est adapté pour générer de l'électricité à partir de l'énergie reçue du rayonnement solaire pour le fonctionnement et l'accumulation dans la batterie.
